# EUROPEAN PATENT APPLICATION

(11) **EP 2 656 730 A1**
(43) Date of publication of application: **30.10.2013**
(21) Application number: 13164923.8
(22) Date of filing: 23.04.2013
(51) Int. Cl.: A01K 1/06, A01K 15/00, A01L 13/00, A61D 3/00

(54) **Apparatus and method for treating the hind legs of a four-legged animal**

(30) Priority: 26.04.2012 NL 2008719
(71) Applicant: Loon- en Mechanisatiebedrijf Wopa-Lichtenvoorde B.V., 7135 JV Harreveld (NL)
(72) Inventor: Wopereis, Johannes Wilhelmus Antonius, 7135 JV Harreveld (NL)
(74) Representative: Jansen, Cornelis Marinus

(57) **Abstract**

An apparatus for treating a hind leg (1,2) of a four-legged animal (K), the apparatus being provided with a frame (10) bounding an animal set-up space (D), the frame having an entrance opening (12) which is on a rear side of the animal set-up space and the frame having an exit opening (16) which is on a front side of the animal set-up space, wherein an entrance-opening closing assembly is provided having at least one pivoting arm (18) and a cross bar (22) connected therewith, wherein a pivotal connection and the at least one pivoting arm connected therewith and the cross bar are connected with the frame in a manner displaceable substantially in horizontal direction between a slid-in and a slid-out position, wherein the pivotal connection in the slid-in position is substantially straight above the entrance opening and in the slid-out position is, viewed with respect to the animal set-up space, at a distance in front of the entrance opening.

## Description

### FIELD

The invention relates to an apparatus for treating the hind legs of a four-legged animal, in particular a cow.

### BACKGROUND

Such an apparatus is known, for example, from EP-1374674. The apparatus serves for tending to a hind leg of the animal while the hind leg is in the raised treatment position. With the apparatus, in particular a claw or hoof of the hind leg to be treated can be inspected for diseases and/or other disorders. Hind leg hoof diseases known for cattle include interdigital dermatitis, founder and Mortellaro's disease. In order to prevent and/or cure such diseases and disorders, the hoof can, for instance, be pedicured, which may comprise cutting the hoof to length, cutting away a bearing surface under the hoof and/or any other form of trimming.

During use of the known apparatus, the animal is set up in an animal set-up space, with both hind legs in a standing position. Front legs of the animal may likewise be in a standing position, but may also, for instance, be each in a different position, such as a kneeling position. In a simple manner, by means of the lifting means, the hind leg to be treated is brought from the standing to the raised treatment position, so that the above-mentioned inspection, care and/or treatment of the hind leg, in particular of the hind leg hoof, can be carried out. After treatment of this hind leg, the leg is returned to the standing position. Then, for instance, the other hind leg can be brought to a raised treatment position by the lifting means in order to be tended to in a similar manner.

Behind the animal's hind leg to be treated extends a cross bar when this hind leg is in a standing position. The cross bar prevents the animal from moving backwards when this leg is in the standing position and hence contributes to the animal being held in the animal set-up space. Moreover, the cross bar can prevent the animal from kicking backwards at least its hind leg to be treated, which increases the safety of an attendant person present behind the animal.

The apparatus known from EP1374674 A2 is provided with:
- a frame bounding an animal set-up space, the frame having an entrance opening which is on a rear side of the animal set-up space and the frame having an exit opening which is on a front side of the animal set-up space;
- an entrance-opening closing assembly which in a closing position closes off the entrance opening and in a release position clears the entrance opening for allowing an animal to pass from the surroundings to the set-up space, the entrance-opening closing assembly being provided with:
   ○ at least one pivoting arm which at a first end thereof is pivotably connected with the frame through a pivotal connection;
   ○ a cross bar which is attached to the at least one pivoting arm;
   wherein in the release position of the entrance-opening closing assembly the at least one pivoting arm is in a folded-up position, so that the cross bar connected therewith does not block the entrance opening and wherein in the closing position of the entrance-opening closing assembly the at least one pivoting arm is in a folded-down position, so that the cross bar connected therewith extends transversely to the entrance opening and blocks the entrance opening;
- lifting means for raising a hind leg of an animal present in the animal set-up space.

### SUMMARY

In practice, it is found that the above-described known apparatus is used in a manner that is not optimal for the animal's well-being. Before the animal has walked completely into the animal set-up space, often a tendency arises on the part of the animal to not walk on any further. To urge the animal further into the animal set-up space then, in practice the entrance-opening closing assembly is brought from the release position into the closing position while the animal is not completely in the animal set-up space yet. The at least one pivoting arm with the cross bar attached to it thereby pivots down and the cross bar ends up on the upper side of the animal's back. Due to the considerable force exerted by the drive of the at least one pivoting arm, the animal in some cases is even pushed down, the hind legs sagging, and then proceeds, forcedly and partly squeezed, to move further into the animal set-up space. This procedure can cause injury of the animal and in any case is not conducive to the animal's well-being.

The invention contemplates providing a solution to this problem, with preservation of the advantages of the known apparatus.

To this end, the invention provides an apparatus according to claim 1. The pivotal connection and the at least one pivoting arm connected therewith and the cross bar are connected with the frame in a manner displaceable substantially in horizontal direction between a slid-in and a slid-out position, wherein the pivotal connection in the slid-in position is substantially straight above the entrance opening and in the slid-out position is, viewed with respect to the animal set-up space, at a distance in front of the entrance opening, wherein in the closing position of the entrance-opening closing assembly the pivotal connection is in the slid-in position, and wherein in the release position of the entrance-opening closing assembly the pivotal connection is in the slid-out position, wherein the entrance-opening closing assembly is bringable into an intermediate position in which the pivotal connection is in the slid-out position and the at least one pivoting arm is in the folded-down position, wherein from the intermediate position the pivotal connection with the at least one pivoting arm connected therewith and cross bar is bringable from the slid-out position to the slid-in position, so that the entrance-opening closing assembly is bringable from the intermediate position to the closing position.

The invention further provides a method according to claim 10. The method comprises:
- providing the apparatus according to any one of claims 1-9;
- bringing the entrance-opening closing assembly into the release position with the at least one pivoting arm in the folded-up position and with the pivotal connection in the slid-out position;
- leading an animal at least in part into the entrance opening;
- bringing the entrance-opening closing assembly into the intermediate position, so that the at least one pivoting arm is in the folded-down position and the pivotal connection is in the slid-out position;
- urging the animal into the animal set-up space by bringing the entrance-opening closing assembly from the intermediate position to the closing position in which the pivotal connection is substantially straight above the entrance opening and the at least one pivoting arm is in the folded-down position.

With the aid of the apparatus and the method according to the invention, a four-legged animal that is still only partly in the animal set-up space can be urged further into the animal set-up space in a simple manner. For when the animal is partly in the animal set-up space, the entrance-opening closing assembly can be brought from the release position into the intermediate position. The pivoting arms are then in the folded-down position. Thereupon the entrance-opening closing assembly can be brought from the intermediate position to the closing position. The pivotal connection, and the at least one pivoting arm connected therewith and cross bar, thereby moves in horizontal direction from the slid-out position to the slid-in position. During that movement the cross bar presses against the hind legs of the animal, as a result of which the animal will walk forwards. Pressing down of the animal's rear, which is uncomfortable and in some cases even causes injuries, is prevented with the apparatus according to the invention. The animal can be brought into the animal set-up space in an efficient manner, which considerably furthers the progress of treatment activities involving a group of animals.

Further elaborations of the apparatus and the method according to the invention are described in the subclaims and will be further clarified below with reference to the drawings.

### BRIEF DESCRIPTION OF THE DRAWINGS

Figs. 1-3 show perspective rear views of an apparatus as described in EP1374674 A2;
Fig. 4 shows a perspective view of an example of an embodiment of the apparatus with the entrance-opening closing assembly in the release position;
Fig. 5 shows a perspective view similar to Fig. 4 with the entrance-opening closing assembly in the intermediate position;
Fig. 6 shows a perspective view similar to Fig. 4 with the entrance-opening closing assembly in the closing position; and
Fig. 7 shows a perspective view of an example of an embodiment of the entrance-opening closing assembly.

### DETAILED DESCRIPTION

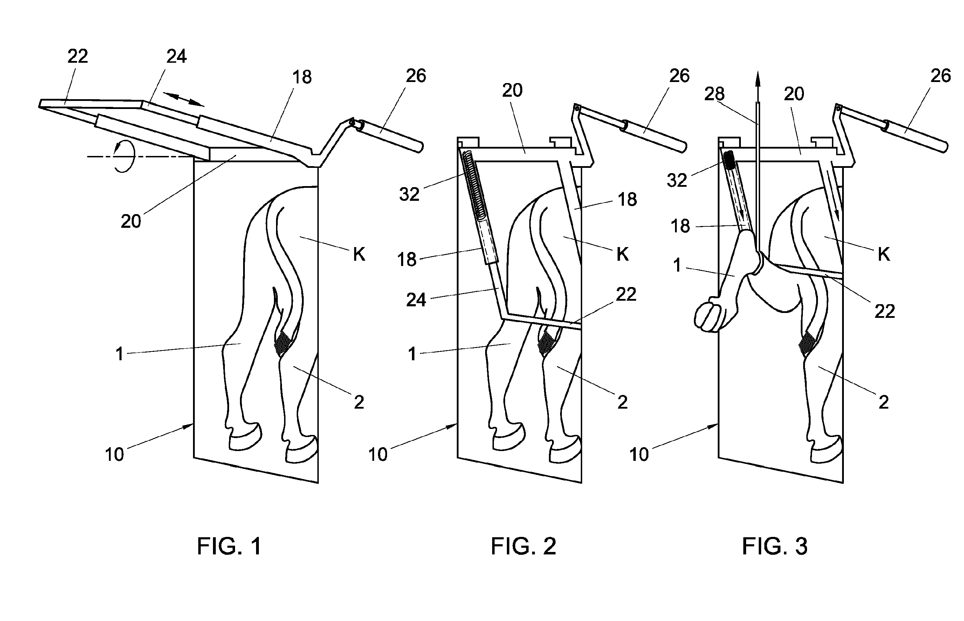

Figs. 1-3 show a relevant part of the apparatus as described in EP1374674 A2. The known apparatus serves for treating the hind legs 1, 2 of a four-legged animal K, in particular a cow. In Figs. 1-3 it is represented how this apparatus is used to attend to the left hind leg 1 of the animal K. The apparatus is correspondingly suitable for treating the right hind leg 2 of the animal K. For clarity of the drawing, only a rear side of the apparatus and a rear side of the animal K are represented in Figs. 1-3.

The apparatus is provided with a frame 10 which bounds an animal set-up space D. A rear side of the frame 10 bounds an entrance opening 12. The known apparatus as well as the apparatus according to the invention is provided with an entrance-opening closing assembly 14. In a closing position, the entrance-opening closing assembly 14 closes off the entrance opening 12. When the entrance-opening closing assembly 14 is in a release position, the entrance opening 12 is cleared to allow an animal to pass from the surroundings to the set-up space D. The entrance-opening closing assembly functions especially to prevent the animal K moving backwards out of the animal set-up space D.

In addition, the known apparatus as well as the apparatus according to the invention may be provided with an exit-opening closing assembly which in a closing position closes off an exit opening 16 situated on the front side of the frame 10 and in a release position clears the exit opening 16 to allow an animal to pass from the animal set-up space D to the surroundings. The exit-opening closing assembly for therewith holding or retaining the animal on a front side, may be designed as a neck chain arranged on or against the animal, a cross bar, a retaining belt and/or two rods configured to be moveable away from each other and towards each other, extending in substantially vertical direction, with which the throat or neck of the animal can be clamped.

The entrance-opening closing assembly 14 is provided with at least one pivoting arm 18 which at a first end thereof is pivotably connected with the frame 10 through a pivotal connection 20. Further, the entrance-opening closing assembly 14 comprises a cross bar 22 which is attached to the at least one pivoting arm 18. In the known apparatus as shown in Figs. 1-3, the entrance-opening closing assembly 14 comprises two pivoting arms 18. Cross bar 22 is fixedly connected with two side arms 24, extending at right angles to the cross bar 22. The side arms 24 extend slidably in tubular pivoting arms 18. These pivoting arms 18 are rotatably coupled via pivotal connection 20 to an upper side of the rear side of the schematically represented frame 10 of the apparatus. By pivoting the pivotal connection 20, the pivoting arms 18 pivot, such that the cross bar 22 can be moved from a release position to a closing position and vice versa. The pivoting movement of the pivoting arms 18 can be energized by means of a drive. The drive can comprise, for example, a hydraulically or pneumatically energized piston/cylinder assembly 26 or a manually operable lever.

In the release position (see Fig. 1) of the entrance-opening closing assembly 14 the at least one pivoting arm 18 is in a folded-up position, so that the cross bar 22 connected therewith does not block the entrance opening. In the closing position (see Fig. 2) of the entrance-opening closing assembly 14, the at least one pivoting arm 18 is in a folded-down position, so that the cross bar 22 connected therewith extends transversely to the entrance opening 12 and blocks the entrance opening 12.

The known apparatus as well as the apparatus according to the invention is further provided with lifting means 28 for raising a hind leg 1, 2 of an animal K present in the animal set-up space D. These lifting means can comprise a chain or rope 28 which can be hauled in or paid out with the aid of a winch or a piston/cylinder assembly 30.

In the release position represented in Fig. 1, the animal K can walk under the cross bar 22 to the animal set-up space via the entrance opening 12 represented in the figure, formed by the frame rear side 10. In the closing position represented in Fig. 2, a cross bar 22 extends behind the two hind legs 1, 2 of the animal K, so that the cross bar 22 prevents backward movement of the animal K.

As Figs. 2 and 3 show, the pivoting arms 18 are provided with springs 32 which are designed to counteract a shift of the side arms 24 in the direction of the pivotal connection 20.

During use of the known apparatus, the animal K is first brought into the animal set-up space D. The entrance-opening closing assembly 14 is then in the release position, as is represented in Fig. 1. Next, the entrance-opening closing assembly 14 is brought to the closing position, with the cross bar 22 situated behind the two hind legs 1, 2 of the animal K to retain the animal K on the rear side. After this, using the lifting means 28, the hind leg 1 to be attended to is brought from the standing position represented in Fig. 2 to the raised treatment position represented in Fig. 3. The cross bar 22 is thereby moved along by the left hind leg 1 in upward direction, against the spring action of the springs 32.

As Fig. 3 shows, this leg 1 is lifted so far that the leg 1 extends from a rear side of the animal K in a direction obliquely upwards. The spring means 32 provide that the cross bar 22, under the influence of a substantially downwardly directed spring force, can move down along the hind leg 1 to a particularly stable position against a rear side of the animal K. In this position the cross bar 22 can exert an effective retaining force on the rear side of the animal K for the purpose of holding the animal K. Moreover, the cross bar 22 abuts against the animal K at the other hind leg 2, so that the cross bar 22 can exert a retaining force on the animal K at that point too. Preferably, the cross bar 22 is so designed that it can be moved with relatively little friction along a hind leg 1, 2 of the animal K. Such moving back along the leg can therefore proceed relatively easily, in particular, as a matter of course. This can be realized, for example, by giving the cross bar 22 a cylindrical cross section. Possibly, the cross bar 22 can be mounted in a manner rotatable about its own longitudinal centerline.

The retroactive force of the spring means 32 is further highly advantageous because the cross bar 22 thereby exerts a clamping force on the hind leg 1 of the animal, so that this hind leg 1 can be very stably held in the desired treatment position. It is clearly visible in Fig. 3 that the cross bar 22, under the influence of the interplay of forces, automatically comes to lie in the hinge hollow of the hip joint of the animal K, where the cross bar 22 finds a stable position ensuring proper clamping of the animal K.

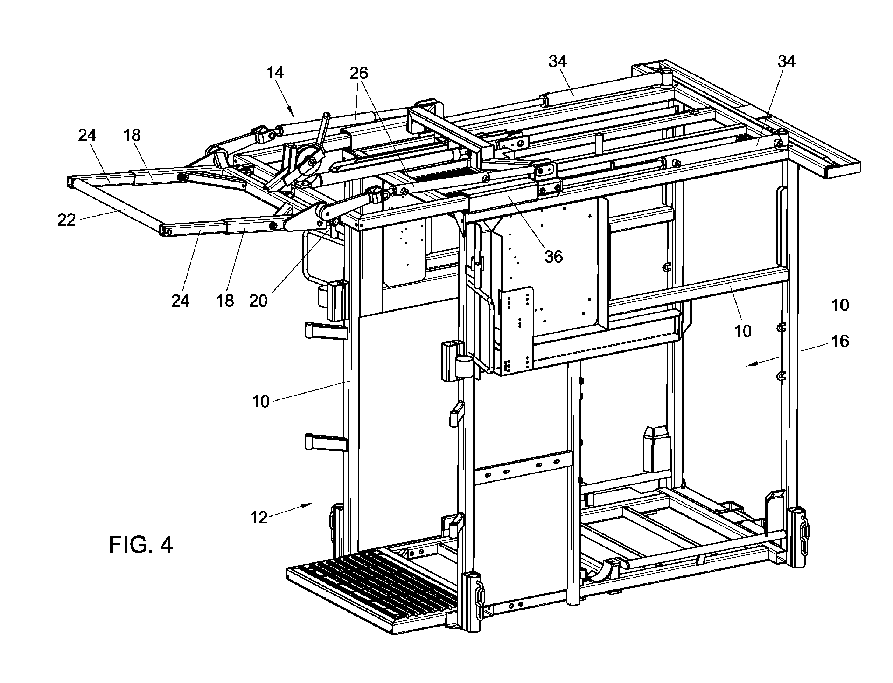

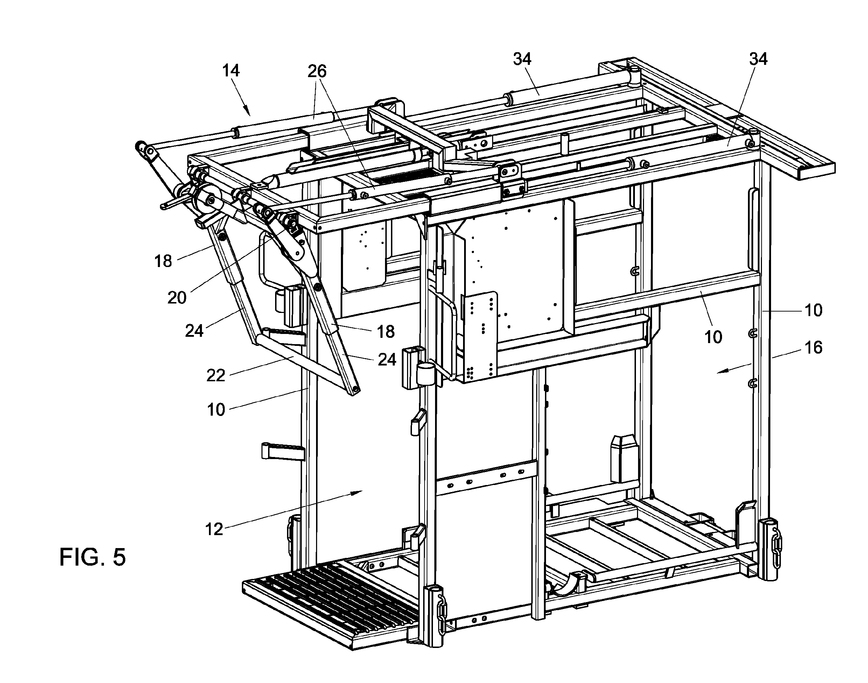

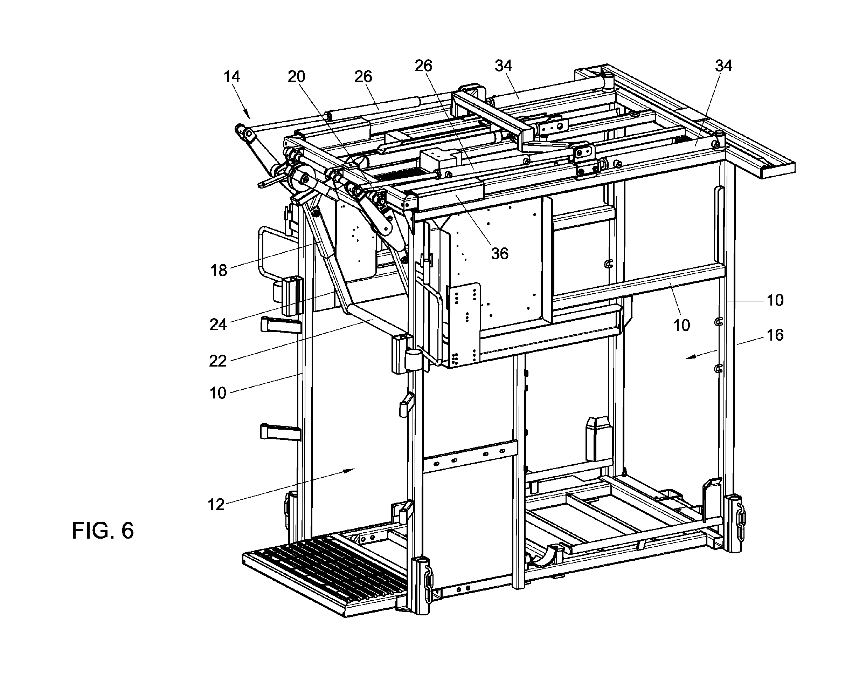

The apparatus according to the invention is distinguished from the known apparatus, described in detail hereinabove with reference to Figs. 1-3, in that the pivotal connection 20 and the at least one pivoting arm 18 connected therewith and the cross bar 22 are connected with the frame 10 in a manner displaceable substantially in horizontal direction between a slid-in (Fig. 6) and a slid-out (Figs. 4 and 5) position. An example of an embodiment of the apparatus is shown in Figs. 4-6. The pivotal connection 20 in the slid-in position is substantially straight above the entrance opening 12, and in the slid-out position, seen with respect to the animal set-up space D, is at a distance in front of the entrance opening 12. In the closing position (Fig. 6) of the entrance-opening closing assembly 14 the pivotal connection 20 is in the slid-in position. In the release position of the entrance-opening closing assembly 14 the pivotal connection 20 is in the slid-out position. The entrance-opening closing assembly 14 is bringable into an intermediate position (Fig. 5) in which the pivotal connection 20 is in the slid-out position and the at least one pivoting arm 18 is in the folded-down position. From the intermediate position (Fig. 5) the pivotal connection 20 with the associated at least one pivoting arm 18 and cross bar 22 is bringable from the slid-out position (Fig. 5) to the slid-in position (Fig. 6), so that the entrance-opening closing assembly 14 is bringable from the intermediate position to the closing position.

With this manner of movement of the entrance-opening closing assembly 14, an animal can first be brought partly into the animal set-up space D, with the entrance-opening closing assembly 14 in the release position (Fig. 4). Thereupon the entrance-opening closing assembly 14 can be brought into the intermediate position (Fig. 5) by pivoting down the pivoting arms 18 and the cross bar 22 connected therewith. Finally, the animal K can be urged further into the animal set-up space D by bringing the entrance-opening closing assembly 14 from the intermediate position (Fig. 5) to the closing position (Fig. 6).

In an embodiment, of which an example is shown in Figs. 4-6, the apparatus may be provided with a first drive which is configured for energizing the pivoting movement of the pivoting arms 18 and with a second drive which is configured for energizing the horizontal displacement of the pivotal connection 20 and the associated at least one pivoting arm 18 and cross bar 22.

In an embodiment, of which an example is shown in Figs. 4-6, the first drive can comprise a first pneumatic piston/cylinder assembly 26 and the second drive can comprise a second pneumatic piston/cylinder assembly 34.

In an alternative embodiment, the first drive may be formed by an electric motor with geared or geared-belt transmission. This also holds for the second drive. Also use of linear electric motors is among the possibilities. An advantage of a pneumatic piston/cylinder assembly is that at relatively low cost a drive is provided with which a large couple or a large force can be generated also at standstill of the parts to be driven. This is of relevance to keeping the entrance-opening closing assembly 14 in the closing position.

In an embodiment, of which an example is shown in Figs. 4-6, the pivotal connection 20 may be connected with the frame 10 via a horizontal guide 36.

The horizontal guide 36 can comprise, for example, a bearing-mounted rail. In an alternative design, the horizontal guide may be constructed as an outer tube which is fixedly connected with the frame 10 and an inner tube which is part of the entrance-opening closing assembly 14. and which is slidably received in the outer tube. Between inner tube and outer tube a liner having a low coefficient of friction may be provided, for example, of plastic.

In an embodiment, of which an example is shown in Figs. 4-6, the earlier-mentioned distance between the entrance opening 12 and the pivotal connection 20 in the slid-out position can be in the range of from 0.3 to 2 meters. In combination with a suitably chosen distance between the pivotal connection 20 and the cross bar 22, which in an embodiment may be in the range of 0.8-1.7 meters, the animal K, from the release position, can then in a suitable manner with the aid of the entrance-opening closing assembly 14 be urged into the animal set-up space D in the above-described manner, even when the animal K at first has only very partly entered the animal set-up space D.

In an embodiment, of which an example is shown in Figs. 4-6, the at least one pivoting arm 18 has an imaginary longitudinal centerline along which the at least one pivoting arm 18 extends, and the cross bar 22 may be connected with the pivoting arm 18 in a manner slidable in the direction of the longitudinal centerline, while spring means 32 are provided which push the cross bar 22 in a direction away from the pivotal connection 20 to an end position (see Figs. 4-6).

The spring means 32 may be configured, for example, as a mechanical or pneumatic compression spring.

As already indicated above, the distance between the pivotal connection 20 and the cross bar 22 in the end position may be in the range of from 0.8 to 1.7 m.

When the cross bar 22 is in fact slidably connected with the pivoting arms 18, in an embodiment, slidability may be enabled over a distance of from 0.3 m to 0.7 m. With such dimensions, it is provided that the cross bar 22 presses against the hind legs 1, 2 of the animal K when the pivoting arms 18 are in the folded-down position and the cross bar 22 is in the end position. Moreover, in the closing position of the entrance-opening closing assembly 14, the cross bar 22 can be sufficiently moved up against the spring action of the spring means 32 when the lifting means 26 are deployed for raising one of the hind legs 1, 2. The cross bar 22 in this way contributes to keeping the lifted hind leg 1, 2 in a stable position.

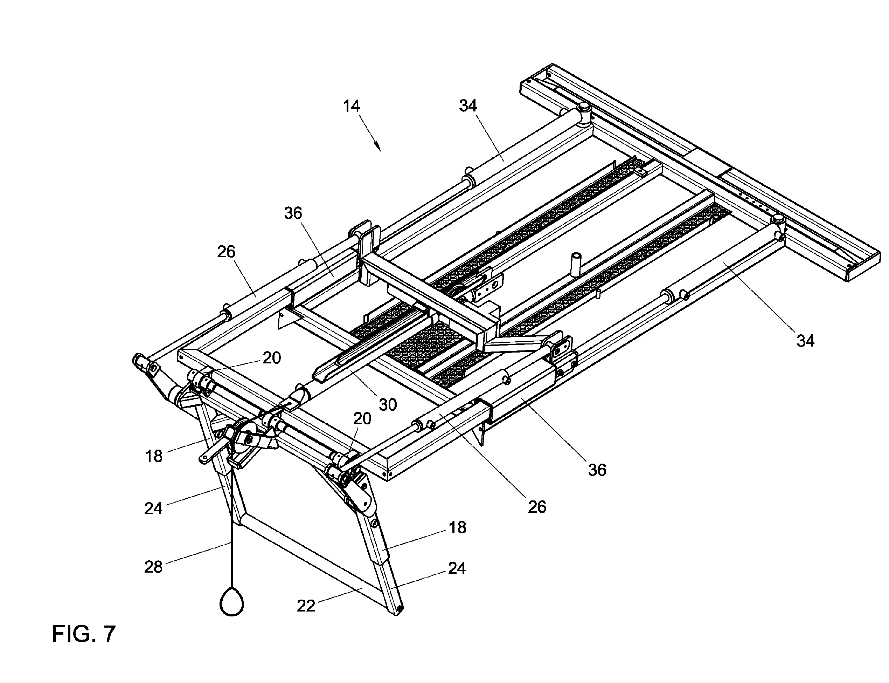

Fig. 7 shows the entrance-opening closing assembly 14 detached from the frame 10. In that figure, there is clearly shown the pair of piston/cylinder assemblies 26 which in this example constitute the drive for the pivoting movement of the pivoting arms 18. Further, there is clearly shown the pair of piston/cylinder assemblies 34 which energize the horizontal movement of the pivotal connection 20. Finally, in that figure, a piston/cylinder assembly 30 is shown which pays out or hauls in the lifting means 28, such as, for example, a cord or rope, for lowering or lifting, respectively, a hind leg 1, 2 to which the lifting means 28 is connected.

The invention further provides a method for treating the hooves of the hind legs of a four-legged animal, the method comprising:
- providing the apparatus according to any one of claims 1-9;
- bringing the entrance-opening closing assembly 14 into the release position (see Fig. 4) with the at least one pivoting arm 18 in the folded-up position and with the pivotal connection 20 in the slid-out position;
- leading an animal K at least in part into the entrance opening 12;
- bringing the entrance-opening closing assembly 14 into the intermediate position (see Fig. 5), so that the at least one pivoting arm 18 is in the folded-down position and the pivotal connection 20 is in the slid-out position;
- urging the animal K into the animal set-up space D by bringing the entrance-opening closing assembly 14 from the intermediate position (Fig. 5) to the closing position (Fig. 6) in which the pivotal connection 20 is substantially straight above the entrance opening 12 and the at least one pivoting arm 18 is in the folded-down position.

In a further elaboration the method can further comprise:
- connecting the lifting means 26 with a hind leg 1, 2 of the animal K after the entrance-opening closing assembly 14 has been brought into the closing position (Fig. 6) and the animal K has been set up in the animal set-up space D;
- lifting with the lifting means 26 the hind leg 1, 2 of the animal K connected with the lifting means 26;
- working the hoof of the lifted hind leg 1, 2.

With the apparatus and method as described above, an animal K can be urged into the animal set-up space D of the apparatus in a simple manner and thereupon treatment of the hind legs 1, 2 of the animal K can be carried out in a comfortable and safe manner. Clearly, after treatment of one or both hind legs 1, 2, the lifting means 26 can be detached from the last-treated hind leg 1, 2, and after the exit-opening closing means have been brought into the release position the animal K can be removed from the animal set-up space D via the exit opening 16.

The invention is not limited to the exemplary embodiments described. Various changes within the scope as defined by the claims fall within the possibilities. The various embodiments that have been described can be used independently of each other or in combination with each other. The reference characters included in the claims do not limit the claims.

## Claims

1. An apparatus for treating a hind leg (1, 2) of a four-legged animal (K), in particular a cow, the apparatus being provided with:
• a frame (10) bounding an animal set-up space (D), the frame (10) having an entrance opening (12) which is on a rear side of the animal set-up space (D), and the frame (10) having an exit opening (16) which is on a front side of the animal set-up space (D);
• an entrance-opening closing assembly (14) which in a closing position closes off the entrance opening (12) and in a release position clears the entrance opening (12) to allow an animal (K) to pass from the surroundings to the animal set-up space (D), the entrance-opening closing assembly (14) being provided with:
○ at least one pivoting arm (18) which at a first end thereof is pivotably connected with the frame (10) through a pivotal connection (20);
○ a cross bar (22) which is attached to the at least one pivoting arm (18);
wherein in the release position of the entrance-opening closing assembly (14) the at least one pivoting arm (18) is in a folded-up position, so that the cross bar (22) connected therewith does not block the entrance opening (12) and wherein in the closing position of the entrance-opening closing assembly (14) the at least one pivoting arm (18) is in a folded-down position, so that the cross bar (22) connected therewith extends transversely to the entrance opening (12) and blocks the entrance opening;
• lifting means (26) for raising a hind leg (1, 2) of an animal (K) present in the animal set-up space (D);
**characterized in that**
the pivotal connection (20) and the at least one pivoting arm (18) connected therewith and the cross bar (22) are connected with the frame (10) in a manner displaceable substantially in horizontal direction between a slid-in and a slid-out position, wherein the pivotal connection (20) in the slid-in position is substantially straight above the entrance opening (12) and in the slid-out position is, viewed with respect to the animal set-up space (D), at a distance (A) in front of the entrance opening (12), wherein in the closing position of the entrance-opening closing assembly (14) the pivotal connection (20) is in the slid-in position, and wherein in the release position of the entrance-opening closing assembly (14) the pivotal connection (20) is in the slid-out position, wherein the entrance-opening closing assembly (14) is bringable into an intermediate position in which the pivotal connection (20) is in the slid-out position and the at least one pivoting arm (18) is in the folded-down position, wherein from the intermediate position the pivotal connection (20) with the at least one pivoting arm (18) connected therewith and cross bar (22) is bringable from the slid-out position to the slid-in position, so that the entrance-opening closing assembly (14) is bringable from the intermediate position to the closing position.

2. The apparatus according to claim 1, provided with:
• a first drive (26) which is configured for energizing the pivoting movement of the pivoting arms (18);
• a second drive (34) which is configured for energizing the horizontal displacement of the pivotal connection (20) and the at least one pivoting arm (18) connected therewith and cross bar (22).

3. The apparatus according to claim 2, wherein the first drive comprises a first pneumatic piston/cylinder assembly (26) and wherein the second drive comprises a second pneumatic piston/cylinder assembly (34).

4. The apparatus according to any one of the preceding claims, wherein the pivotal connection (20) is connected with the frame (10) via a horizontal guide (36).

5. The apparatus according to any one of the preceding claims, wherein the distance (A) is in the range of from 0.3 to 2 meters.

6. The apparatus according to any one of the preceding claims, wherein the at least one pivoting arm (18) has an imaginary longitudinal centerline (L) along which the at least one pivoting arm (18) extends, wherein the cross bar (22) is connected with the pivoting arm (18) in a manner slidable in the direction of the longitudinal centerline (L), wherein spring means (32) are provided which push the cross bar (22) in a direction away from the pivotal connection (20) to an end position.

7. The apparatus according to claim 6, wherein the spring means (32) are configured as a mechanical or pneumatic compression spring.

8. The apparatus according to any one of the preceding claims, wherein a distance (B) between the pivotal connection (20) and the cross bar (22) in the end position is in the range of from 0.8 to 1.7 m.

9. The apparatus according to any one of claims 6 to 8, wherein the cross bar (22) is slidable over a distance (C) of from 0.3 to 0.7 m.

10. A method for treating the hooves of the hind legs (1, 2) of a four-legged hoofed animal (K), the method comprising:
• providing the apparatus according to any one of claims 1-9;
• bringing the entrance-opening closing assembly (14) into the release position with the at least one pivoting arm (18) in the folded-up position and with the pivotal connection (20) in the slid-out position;
• leading an animal (K) at least in part into the entrance opening (12);
• bringing the entrance-opening closing assembly (14) into the intermediate position, so that the at least one pivoting arm (18) is in the folded-down position and the pivotal connection (20) is in the slid-out position;
• urging the animal (K) into the animal set-up space (D) by bringing the entrance-opening closing assembly (14) from the intermediate position to the closing position in which the pivotal connection (20) is substantially straight above the entrance opening (12) and the at least one pivoting arm (18) is in the folded-down position.

11. The method according to claim 10, comprising:
• connecting the lifting means (26) with a hind leg (1, 2) of the animal (K) after the entrance-opening closing assembly (14) has been brought into the closing position and the animal (K) has been set up in the animal set-up space (D);
• lifting with the lifting means (26) the hind leg (1, 2) of the animal (K) connected with the lifting means; and
• working the hoof of the lifted hind leg (1, 2).
